# EUROPÄISCHE PATENTSCHRIFT

(11) **EP 1 495 966 B1**
(45) Veröffentlichungstag und Bekanntmachung des Hinweises auf die Patenterteilung: **03.01.2007**
(21) Anmeldenummer: 04015432.0
(22) Anmeldetag: 01.07.2004
(51) Int. Cl.: B65B 9/22, B65B 9/20, B65B 59/04, B65B 59/00

(54) **Vertikale Schlauchbeutelmaschine**
Vertical tubular bag making machine
Machine verticale de fabrication de sacs tubulaires

(30) Priorität: 09.07.2003 DE 10330852
(43) Veröffentlichungstag der Anmeldung: 12.01.2005
(73) Patentinhaber: ROVEMA VERPACKUNGSMASCHINEN GMBH, 35463 Fernwald (DE)
(72) Erfinder: Braun, Harald, 35305 Grünberg (DE); Baur, Walter, Dr., 63584 Gründau (DE)

(56) Entgegenhaltungen:
- EP-A- 0 818 389
- DE-A- 3 841 056
- PATENT ABSTRACTS OF JAPAN Bd. 015, Nr. 257 (M-1130), 28. Juni 1991 (1991-06-28) -& JP 03 085208 A (KAWASHIMA PACKAGING MACH LTD), 10. April 1991 (1991-04-10)

## Beschreibung

Die Erfindung betrifft eine vertikale Schlauchbeutelmaschine gemäß dem Oberbegriff des Anspruchs 1.

Vertikale Schlauchbeutelmaschinen dienen zum Erzeugen und Befüllen von Schlauchbeuteln und sind hinlänglich bekannt. An diesen Maschinen wird eine von einer Vorratsrolle abgewickelte Folienbahn mittels einer Formschulter zu einem vertikal ausgerichteten Folienschlauch umgeformt. Das untere Schlauchende wird befüllt, verschweißt und vom restlichen Folienschlauch abgetrennt, um derart befüllte Schlauchbeutel zu erzeugen.

Es werden, je nach zu erreichenden Beuteltyp, unterschiedliche Formschultern eingesetzt. Im allgemeinen besteht eine Formschulter aus einem einteiligen Schultermantel, über den die ebene Folienbahn läuft, um zu einer Umlenkkante zu gelangen. An der Umlenkkante wird die Folienbahn sodann umgeformt, um sich nach Passieren der Umlenkkante als vertikal ausgerichteter Folienschlauch weiterzubewegen. Dabei durchläuft der Folienschlauch eine ringförmige Passage, welche außen von einem Schulterstutzen und von innen her von einem Füllrohr begrenzt wird.

Diese herkömmliche Ausgestaltung hat den Nachteil, dass das Füllrohr nur dann seitlich entnommen werden kann, wenn die Formschulter zuvor entfernt wird.

Aus der CH 490 995 ist ein Formelement zum Umformen einer Folienbahn zu einem Folienschlauch bekannt, das aus zwei separaten Teilen besteht. Diese Teile bilden zusammen ein äußeres Führungsteil. Um ein Füllrohr seitlich herausnehmen zu können, werden die Teile voneinander getrennt.

Das bekannte Formelement hat den Nachteil, dass es für einen gleichmäßigen Folieneinlauf weniger geeignet ist, da die einlaufende Folienbahn kaum gestützt wird.

Aus der DE 38 41 056 A1 ist eine vertikale Schlauchbeutelmaschine gemäß dem Oberbegriff des Anspruchs 1 bekannt, wobei eine geteilte Formschulter eingesetzt wird, um dünne Folien für warmes Packgut als Verpackungsmaterial zu nutzen.

Die Formschulter hat den Nachteil, dass sie nicht größenverstellbar ist.

Der Erfindung liegt die Aufgabe zugrunde, eine vertikale Schlauchbeutelmaschine gemäß dem Oberbegriff des Anspruchs 1 derart weiterzubilden, dass die Formschulter größenverstellbar ist.

Gelöst ist diese Aufgabe gemäß Anspruch 1.

Bei der vorgeschlagenen Schlauchbeutelmaschine wird der Schultermantel aus zwei separaten Mantelteilen und der Schulterstutzen aus zwei separaten Stutzenteilen gebildet, bilden jeweils ein Mantelteil und ein daran angrenzendes Stutzenteil eine Baueinheit, beschreiben die beiden Baueinheiten die Formschulter, und ist eine Baueinheit von der anderen Baueinheit abnehmbar, um das Füllrohr quer zur Transportrichtung aus der Formschulter entnehmen zu können.

Die vorgeschlagene Schlauchbeutelmaschine hat den Vorteil, dass eine seitliche Füllrohrentnahme in einfacher Weise möglich ist, da die Baueinheiten voneinander getrennt werden können, um das Füllrohr dazwischen herauszunehmen. Die Folienbahn wird in zuverlässiger Weise gestützt, da jede Baueinheit ein Mantelteil aufweist, und die beiden Mantelteile einen herkömmlichen Schultermantel ausmachen oder zumindest in teilen ausreichend ersetzen. Die Baueinheiten sind zudem leicht handhabbar, was eine relativ schnelle Füllrohrentnahme ermöglicht.

An der Schlauchbeutelmaschine ist eine hintere Baueinheit vorgesehen, welche zur einlaufenden Folienbahn hin positioniert ist, und eine vordere Baueinheit im Bereich der aneinanderliegenden Ränder des Folienschlauches. So ist zum einen ein ortsgenauer Lauf der Folienbahn zur Umlenkkante und zum anderen ein ortsgenauer Lauf der Ränder der Folienbahn hin zu einer Längssiegeleinrichtung erreicht.

Mit einer vorgeschlagenen Einrichtung zum Verstellen und Fixieren des Abstandes zwischen den Baueinheiten wird erreicht, dass die Formschulter auf eine andere Folienbahnbreite und damit auf eine andere Beutelbreite eingestellt werden kann. Eine vorgeschlagene Höhenverstellung zum Verstellen und Fixieren der relativen Höhe einer Baueinheit relativ zur anderen Baueinheit dient dazu, dass beiden die Umlenkkante bildenden oberen Kanten der Mantelteile bzw. der Stutzenteile auch bei Vorliegen eines Abstandes zwischen den Bauteilen so eingestellt werden, dass die Kanten sich gegenseitig in ihrer Erstreckungsrichtung fortsetzen. Dadurch ist die Formschulter bezüglich ihrer Größe verstellbar.

In einer vorteilhaften Ausgestaltung kann ein Abstand zwischen den Mantelteilen oder den Baueinheiten mittels eines Spannmaterials, insbesondere eines Streifens überspannt werden, wobei ein Rand des Spannmaterials einen Teil der Umlenkkante bildet (Anspruch 2). Dann weist die Umlenkkante keine Lücke auf, was die Folienbahn sicherer umformt.

Die genaueste Folienführung ist analog Anspruch 3 erreicht, wenn die Mantelteile passgenau und dicht aneinander anliegen.

Eine wesentliche Verbesserung der Servicefreundlichkeit der Schlauchbeutelmaschine ist erreicht, wenn gemäß Anspruch 4 das Füllrohr aus zwei mit ihrem Inneren gegeneinander ausgerichteten lösbaren miteinander verbundenen Rinnen gebildet ist. Dann kann nach einem Öffnen der Formschulter zusätzlich das Füllrohr geöffnet werden, indem man seitlich eine Rinne abnimmt. Dies hat den großen Vorteil, dass eine im Füllrohr vorgesehene Dosierschnecke, die bei Pulverdosierungen sehr oft eingesetzt wird, seitlich aus dem Füllrohr entnommen werden kann. Ein umständliches, durch obere Bauteile im allgemeinen behindertes, nach oben Herausziehen einer relativ langen und schweren Dosierschnecke wird somit vermieden. Das seitliche Herausnehmen der Dosierschnecke hat zudem den Vorteil, dass der Raum oberhalb der Dosierschnecke für andere sinnvolle Aggregate genutzt werden kann, d. h. nicht mehr ausgespart werden muss. Oder dieser Raum kann gänzlich entfallen, was zu einer kompakteren Bauweise und damit zu einem geringeren Platzbedarf für die vertikale Schlauchbeutelmaschine führt.

Ist gemäß Anspruch 5 eine Einrichtung zum Verstellen und Arretieren des zwischen den beiden Rinnen vorliegenden Abstandes vorgesehen, so kann mittels einer Abstandsverstellung das Füllrohr auf ein anderes Beutelformat eingestellt werden.

Das Herausheben einer Förderschnecke aus dem Füllrohr erfolgt am einfachsten in Richtung zur Längssiegeleinrichtung hin, da dort maschinenbedingt ein entsprechender Freiraum vorkommt. Dies ist möglich, wenn analog Anspruch 6 die lösbare Rinne im Bereich der aneinanderliegenden Ränder des Folienschlauches vorgesehen ist.

Im folgenden wird die Erfindung an Hand von Ausführungsbeispiele darstellenden Figuren näher beschrieben. Es zeigt:
- Figur 1: in einer Seitenansicht eine vertikale Schlauchbeutelmaschine mit einer von einer Vorratsrolle abgewickelten Folienbahn, einer Formschulter zum Umformen der Folienbahn zu einem Folienschlauch, einer Längs- und einer Quersiegeleinrichtung zum Verschweißen des Folienschlauches, und einem Füllrohr zum Aufnehmen und Befüllen des Folienschlauches, wobei die Formschulter aus zwei Bauteilen gebildet ist, welche jeweils einen Mantelteil und einen Stutzenteil umfassen und das Füllrohr aus zwei Rinnen besteht;
- Figur 2: in einer perspektivischen Ansicht die Formschulter mitsamt einem Teil der beiden Rinnen der Figur 1, sowie
- Figur 3: in einer Seitenansicht eine aus zwei Bauteilen bestehende Formschulter, wobei der Abstand zwischen den Bauteilen einstellbar ist.

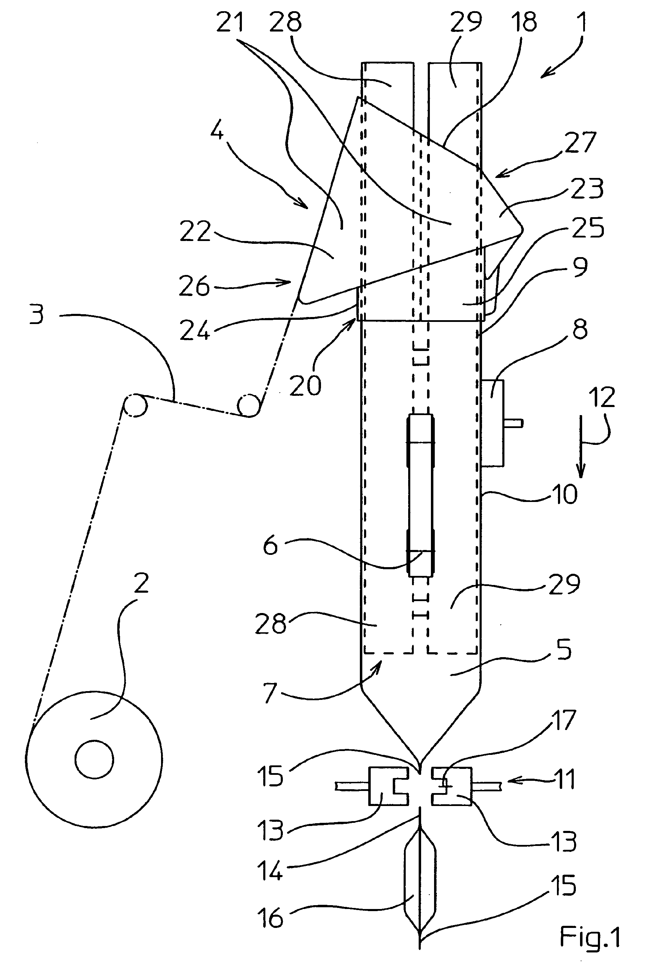

Bei einer vertikalen Schlauchbeutelmaschine 1 wird eine Folienbahn 3 von einer Vorratsrolle 2 abgewickelt (Figur 1). Eine Formschulter 4 dient zum Umformen der Folienbahn 3 zu einem Folienschlauch 5. Ein Folienabzug 6 dient zum Weitertransportieren der Folienbahn 3 und des Folienschlauches 5. Ein vertikal ausgerichtetes Füllrohr 7 ist zum Aufnehmen und Befüllen des Folienschlauches 5 vorgesehen. Eine Längssiegeleinrichtung 8 dient zum Verschweißen der Ränder 9 der Folienbahn 3 und damit zum Erzeugen einer Längssiegelnaht 10 des Folienschlauches 5. Eine Quersiegeleinrichtung 11 mit gegeneinander beweglichen, den Folienschlauch 5 quer zu seiner Transportrichtung 12 verschweißenden Schweißbacken 13 ist zum Erzeugen von Kopfnähten 14 und Bodennähten 15 an Schlauchbeuteln 16 vorgesehen.

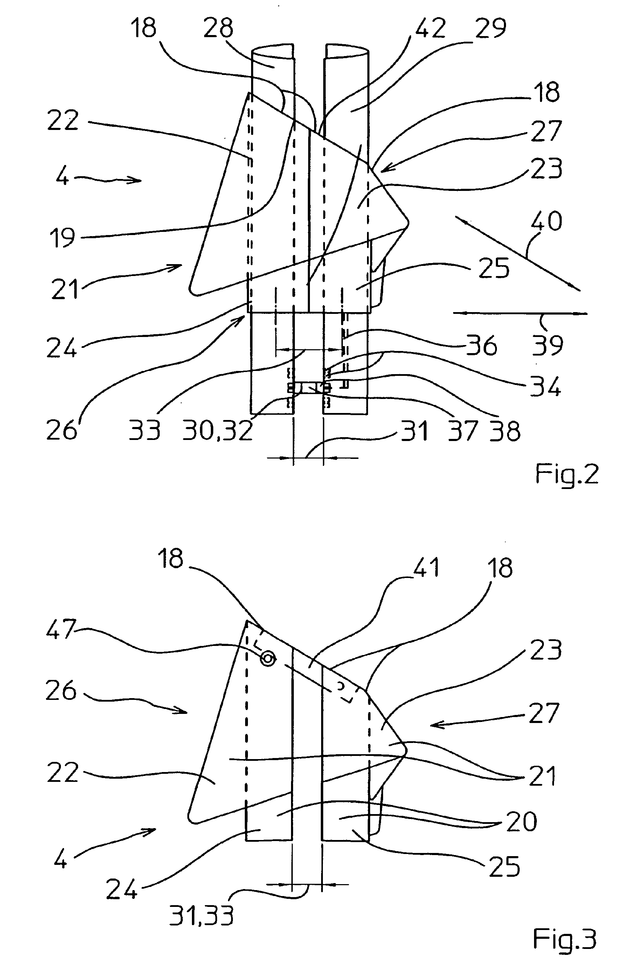

Eine Trenneinrichtung 17 dient zum Abtrennen der Schlauchbeutel 16 vom Folienschlauch 5. Die Formschulter 4 weist eine Umlenkkante 18 an einem oberen Rand 19 eines das Füllrohr 7 umgebenden Schulterstutzen 20 auf, ebenso einen an der gekrümmten Umlenkkante 18 ansetzenden, von der Umlenkkante 18 nach außen weg weisenden Schultermantel 21. Der Schultermantel 21 (Figur 2) wird aus zwei separaten Mantelteilen 22, 23 gebildet. Der Schulterstutzen 20 besteht aus zwei separaten Stutzenteilen 24, 25. Jeweils ein Mantelteil 22, 23 und ein daran angrenzendes Stutzenteil 24, 25 bilden eine Baueinheit 26, 27. Die beiden Baueinheiten 26, 27 beschreiben die Formschulter 4. Eine Baueinheit 27 ist von der anderen Baueinheit 26 abnehmbar, um das Füllrohr 7 oder nur einen Teil davon quer zur Transportrichtung 12 aus der Formschulter 4 entnehmen zu können.

Das Füllrohr 7 besteht aus zwei mit ihrem Inneren gegeneinander ausgerichteten Rinnen 28, 29, wobei eine Rinne 29 lösbar mit der anderen Rinne 28 verbunden ist. Als Verbindung dient eine Einrichtung 30 zum Verstellen und Arretieren des zwischen den beiden Rinnen 28, 29 vorliegenden Abstandes 31. Die lösbare Rinne 29 ist im Bereich der aneinanderliegenden Ränder 9 des Folienschlauches 5 vorgesehen. Die hintere Baueinheit 26 ist zur einlaufenden Folienbahn 3 hin positioniert. Die vordere Baueinheit 27 ist im Bereich der aneinanderliegenden Ränder 9 des Folienschlauches 5 vorgesehen und ist vorne nahezu geschlossen, um die Ränder 9 gegeneinanderzulegen. Die Einrichtung 30 dient auch als Einrichtung 32 zum Verstellen und Fixieren des Abstandes 33 zwischen den Baueinheiten 26, 27. Eine Höhenverstellung 34 zum Verstellen und Fixieren der relativen Höhe einer Baueinheit 27 relativ zur anderen Baueinheit 26 enthält eine Vielzahl an Bohrungen in den Rinnen 28, 29 und Steckmodule 38 an der Einrichtung 30. Mit ihr ist ein Gestänge 36 verbunden. Durch eine Abstandseinstellung an einem Drehgewinde 37 wird der Abstand 31 der Rinnen 28, 29 in Richtung 39 z. B. auf eine größere Beutelbreite eingestellt. Die Umlenkkante 18 der Baueinheit 27 wird daraufhin durch Tiefersetzen des Steckmoduls 38 und damit des Gestänges 36 erreicht, wobei die gesamte Baueinheit 27 tiefergesetzt wird. Derart wird der an der Baueinheit 27 befindliche Teil der Umlenkkante 18 in Richtung 40 der Umlenkkante verschoben. Das Steckmodul 38 erlaubt es, die Rinne 29 und die Baueinheit 27 in einfacher Weise nach vorne (in Richtung 39) abzuziehen, um derart eine im Füllrohr 7 befindliche (nicht dargestellte) Dosierschnecke seitlich in Richtung 39 aus dem Füllrohr 7 zu entnehmen.

Beim Ausführungsbeispiel der Figur 2 ist zwischen den Mantelteilen 22, 23 und den Stutzenteilen 24, 25 ein Abstand 31, 33 vorgesehen, welcher mittels eines Spannmaterials 41 überspannt ist. Dabei bildet ein oberer Rand 42 des Spannmaterials 41 einen Teil der Umlenkkante 18.

Beim Ausführungsbeispiel der Figur 3 dient als Spannmaterial 41 zum Überbrücken der Umlenkkante 18 ein Streifen, der auf einem Rad 47 abgestützt ist und die Abstände 31, 33 sind gleich. Ansonsten gilt das für Figur 2 gesagte.
- 1: Schlauchbeutelmaschine
- 2: Vorratsrolle
- 3: Folienbahn
- 4: Formschulter
- 5: Folienschlauch
- 6: Folienabzug
- 7: Füllrohr
- 8: Längssiegeleinrichtung
- 9: Rand
- 10: Längssiegelnaht
- 11: Quersiegeleinrichtung
- 12: Transportrichtung
- 13: Schweißbacke
- 14: Kopfnaht
- 15: Bodennaht
- 16: Schlauchbeutel
- 17: Trenneinrichtung
- 18: Umlenkkante
- 19: oberer Rand
- 20: Schulterstutzen
- 21: Schultermantel
- 22, 23: Mantelteil
- 24, 25: Stutzenteil
- 26, 27: Baueinheit
- 28, 29: Rinne
- 30: Einrichtung zum Verstellen
- 31: Abstand
- 32: Einrichtung zum Verstellen
- 33: Abstand
- 34: Höhenverstellung
- 36: Gestänge
- 37: Drehgewinde
- 38: Steckmodul
- 39, 40: Richtung
- 41: Spannmaterial
- 42: oberer Rand
- 47: Rad

## Patentansprüche

1. Vertikale Schlauchbeutelmaschine (1) mit einer von einer Vorratsrolle (2) abgewickelten Folienbahn (3), einer Formschulter (4) zum Umformen der Folienbahn (3) zu einem Folienschlauch (5), einen Folienabzug (6) zum Weitertransportieren der Folienbahn (3) und des Folienschlauches (5), einem vertikal ausgerichteten Füllrohr (7) zum Aufnehmen und Befüllen des Folienschlauches (5), einer Längssiegeleinrichtung (8) zum Verschweißen der Ränder (9) der Folienbahn (3) und damit zum Erzeugen einer Längssiegelnaht (10) des Folienschlauches (5), einer Quersiegeleinrichtung (11) mit gegeneinander beweglichen, den Folienschlauch (5) quer zu seiner Transportrichtung (12) verschweißenden Schweißbacken (13) zum Erzeugen von Kopfnähten (14) und Bodennähten (15) an Schlauchbeuteln (16), und einer Trenneinrichtung (17) zum Abtrennen der Schlauchbeutel (16) vom Folienschlauch (5), wobei die Formschulter (4) eine Umlenkkante (18) an einem oberen Rand (19) eines das Füllrohr (7) umgebenden Schulterstutzens (20) und einem an der gekrümmten Umlenkkante (18) ansetzenden, von der Umlenkkante (18) nach außen weg weisenden Schultermantel (21) aufweist, der Schultermantel (21) aus zwei separaten Mantelteilen (22, 23) gebildet wird, der Schulterstutzen (20) aus zwei separaten Stutzenteilen (24, 25) gebildet wird, jeweils ein Mantelteil (22, 23) und ein daran angrenzendes Stutzenteil (24, 25) eine Baueinheit (26, 27) bilden, die beiden Baueinheiten (26, 27) die Formschulter (4) beschreiben, und eine Baueinheit (27) von der anderen Baueinheit (26) abnehmbar ist, um das Füllrohr (7) quer zur Transportrichtung (12) aus der Formschulter (4) entnehmen zu können, sowie eine hintere Baueinheit (26) vorgesehen ist, welche zur einlaufenden Folienbahn (3) hin positioniert ist, und eine vordere Baueinheit (27) im Bereich der aneinanderliegenden Ränder (9) des Folienschlauches (5) vorgesehen ist, **dadurch gekennzeichnet, dass** eine Einrichtung (32) zum Verstellen und Fixieren des Abstandes (33) zwischen den Baueinheiten (26, 27) vorgesehen ist, und dass eine Höhenverstellung (34) zum Verstellen und Fixieren der relativen Höhe einer Baueinheit (27) relativ zur anderen Baueinheit (26) vorgesehen ist.

2. Schlauchbeutelmaschine nach Anspruch 1, **dadurch gekennzeichnet, dass** zwischen den Mantelteilen (22, 23) oder den Baueinheiten (26, 27) ein Abstand (31, 33) vorgesehen ist, welcher mitte!s eines Spannmaterials (41), insbesondere eines Streifens überspannt ist, und dass ein Rand (42) des Spannmaterials (41) einen Teil der Umlenkkante (18) bildet.

3. Schlauchbeutelmaschine nach Anspruch 1 oder Anspruch 2, **dadurch gekennzeichnet, dass** die Mantelteile (22, 23) passgenau und dicht aneinander anliegen.

4. Schlauchbeutelmaschine nach einem der Ansprüche 1 bis 3, **dadurch gekennzeichnet, dass** das Füllrohr (7) aus zwei mit ihrem Inneren gegeneinander ausgerichteten Rinnen (28, 29) gebildet ist, und dass eine Rinne (29) lösbar mit der anderen Rinne (28) verbunden ist.

5. Schlauchbeutelmaschine nach Anspruch 4, **dadurch gekennzeichnet, dass** eine Einrichtung (30) zum Verstellen und Arretieren des zwischen den beiden Rinnen (28, 29) vorliegenden Abstandes (31) vorgesehen ist.

6. Schlauchbeutelmaschine nach Anspruch 5, **dadurch gekennzeichnet, dass** die lösbare Rinne (29) im Bereich der aneinanderliegenden Ränder (9) des Folienschlauches (5) vorgesehen ist.

## Claims

1. A vertical bag forming, filling and sealing machine (1) having a film web (3) which is unwound from a supply roller (2), a forming shoulder (4) for forming the film web (3) into a film tube (5), a film draw-off device (6) for transporting the film web (3) and the film tube (5) further, a vertically aligned fill pipe (7) for receiving and filling the film tube (5), a longitudinal seal device (8) for welding the edges (9) of the film web (3) and therefore for generating a longitudinal sealed seam (10) of the film tube (5), a transverse seal device (11) having welding jaws (13) which are movable with respect to one another and weld the film tube (5) transversely to its transport direction (12) for the purpose of generating top seams (14) and bottom seams (15) on tubular bags (16), and a separating device (17) for separating the tubular bag (16) from the film tube (5), the forming shoulder (4) having a deflection edge (18) on an upper edge (19) of a shoulder connection piece (20) surrounding the fill pipe (7), and a shoulder casing (21) which is set against the curved deflection edge (18) and points outwardly away from the deflection edge (18), the shoulder casing (21) being formed from two separate casing parts (22, 23), the shoulder connection piece (20) being formed from two separate connection-piece parts (24, 25), a casing part (22, 23) and a connection-piece part (24, 25) adjoining said casing part in each case forming a structural unit (26, 27), the two structural units (26, 27) describing the forming shoulder (4) and one structural unit (27) being removable from the other structural unit (26) to enable the fill pipe (7) to be removed from the forming shoulder (4) transversely to the transport direction, and a rear structural unit (26) being provided in a position facing towards the incoming film web (3), and a front structural unit (27) being provided in the region of the mutually abutting edges (9) of the film tube (5), **characterised in that** a device (32) for adjusting and fixing the spacing (33) between the structural units (26, 27) is provided, and **in that** a height adjusting means (34) for adjusting and fixing the relative height of one structural unit (27) in relation to the other structural unit (26) is provided.

2. A bag forming, filling and sealing machine according to Claim 1, **characterised in that** a spacing (31, 33), which is bridged by means of a stretch material (41), particularly a strip, is provided between the casing parts (22, 23) or the structural units (26, 27), and **in that** an edge (42) of the bridging material (41) forms part of the deflection edge (18).

3. A bag forming, filling and sealing machine according to Claim 1 or Claim 2, **characterised in that** the casing parts (22, 23) abut tightly against one another with precise fit.

4. A bag forming, filling and sealing machine according to one of Claims 1 to 3, **characterised in that** the fill pipe (7) is formed from two channels (28, 29) aligned with their insides towards one another, and **in that** one channel (29) is detachably connected to the other channel (28).

5. A bag forming, filling and sealing machine according to Claim 4, **characterised in that** a device (30) for adjusting and locking the spacing (31) present between the two channels (28, 29) is provided.

6. A bag forming, filling and sealing machine according to Claim 5, **characterised in that** the detachable channel (29) is provided in the region of the mutually abutting edges (9) of the film tube (5).

## Revendications

1. Machine de fabrication de sachets tubulaires (1) avec un ruban de feuille (3) déroulé par un rouleau d'alimentation (2), un épaulement de moulage (4) pour former le ruban de feuille (3) sous forme d'une gaine de feuille (5), une séparation par tirage de feuille (6) pour poursuivre le transport du ruban de feuille (3) et de la gaine de feuille (5), un tube de remplissage (7) orienté verticalement pour la prise et le remplissage de la gaine de feuille (5), un dispositif de scellement longitudinal (8) pour la soudure des bords (9) du ruban de feuille (3) et, donc, pour la formation d'une couture de scellement longitudinale (10) de la gaine de feuille (5), un dispositif de scellement transversal (11) avec des mâchoires de soudure (13) mobiles l'une contre l'autre qui soudent la gaine de feuille (5) transversalement à son sens de transport (12) pour former des coutures de tête (14) et des coutures de fond (15) dans les sachets tubulaires (16), et un dispositif de séparation (17) pour séparer les sachets tubulaires (16) de la gaine de feuille (5), dans laquelle l'épaulement de moulage (4) comporte une arête de déviation (18) sur un bord supérieur (19) d'un manchon d'épaulement (20) entourant le tube de remplissage (7) et une enveloppe d'épaulement (21) se posant sur l'arête de déviation (18) recourbée et orientée vers l'extérieur à l'opposé de l'arête de déviation (18), l'enveloppe d'épaulement (21) est formée par deux parties d'enveloppe séparées (22, 23), le manchon d'épaulement (20) est formé par deux parties de manchon séparées (24, 25), une partie d'enveloppe (22, 23) et une partie de manchon (24, 25) adjacente à celle-ci forment une unité modulaire (26, 27), les deux unités modulaires (26, 27) décrivent l'épaulement de moulage (4) et une unité modulaire (27) peut être séparée de l'autre unité modulaire (26) pour pouvoir enlever le tube de remplissage (7) hors de l'épaulement de moulage (4) perpendiculairement au sens de transport (12), et il est prévu une unité modulaire arrière (26) qui est positionnée vers le ruban de feuille entrant (3) et une unité modulaire avant (27) dans la zone des bords adjacents (9) de la gaine de feuille (5), **caractérisée en ce qu'**il est prévu un dispositif (32) pour régler et fixer la distance (33) entre les unités modulaires (26, 27) et **en ce qu'**il est prévu un réglage en hauteur (34) pour régler et fixer la hauteur relative d'une unité modulaire (27) par rapport à l'autre unité modulaire (26).

2. Machine de fabrication de sachets tubulaires selon la revendication 1, **caractérisée en ce qu'**il est prévu une distance (31, 33) entre les parties d'enveloppe (22, 23) ou les unités modulaires (26, 27) qui est recouverte à l'aide d'une matière de tension (41), en particulier une bande, et **en ce qu'**un bord (42) de la matière de tension (41) forme une partie de l'arête de déviation (18).

3. Machine de fabrication de sachets tubulaires selon la revendication 1 ou la revendication 2, **caractérisée en ce que** les parties d'enveloppe (22, 23) s'appuient de manière ajustée et étanche l'une sur l'autre.

4. Machine de fabrication de sachets tubulaires selon l'une quelconque des revendications 1 à 3, **caractérisée en ce que** le tube de remplissage (7) est formé par deux canaux (28, 29) dont les intérieurs sont orientés l'un contre l'autre et **en ce qu'**un canal (29) est raccordé de manière amovible à l'autre canal (28).

5. Machine de fabrication de sachets tubulaires selon la revendication 4, **caractérisée en ce qu'**il est prévu un dispositif (30) pour le réglage et le blocage de la distance (31) présente entre les deux canaux (28, 29).

6. Machine de fabrication de sachets tubulaires selon la revendication 5, **caractérisée en ce que** le canal amovible (29) est prévu dans la zone des bords adjacents (9) de la gaine de feuille (5).
